(19) Europäisches Patentamt

European Patent Office

Office européen des brevets

(11) EP 0 576 947 B1

(12) **FASCICULE DE BREVET EUROPEEN**

(45) Date de publication et mention
de la délivrance du brevet:
**15.01.1997 Bulletin 1997/03**

(51) Int. Cl.⁶: **B60L 11/18**

(21) Numéro de dépôt: **93109858.6**

(22) Date de dépôt: **21.06.1993**

(54) **Système moteur d'un véhicule du type électrique**

Motorsystem eines Fahrzeuges vom Typ elektrisch

Motor system of an electric vehicle

(84) Etats contractants désignés:
**AT BE CH DE DK ES FR GB GR IE IT LI LU NL PT SE**

(30) Priorité: **29.07.1992 FR 9209506**
**01.07.1992 CH 2072/92**

(43) Date de publication de la demande:
**05.01.1994 Bulletin 1994/01**

(73) Titulaire: **SMH Management Services AG**
**CH-2501 Biel (CH)**

(72) Inventeur: **Jeanneret,René**
**CH-3274 Merzligen (CH)**

(74) Mandataire: **Thérond, Gérard Raymond et al**
**I C B**
**Ingénieurs Conseils en Brevets SA**
**Rue des Sors 7**
**2074 Marin (CH)**

(56) Documents cités:
EP-A- 0 085 394          DE-A- 3 714 404
DE-A- 4 011 291          US-A- 4 335 337

## Description

La présente invention concerne un système moteur d'un véhicule du type électrique. Plus particulièrement, la présente invention concerne un système moteur d'un véhicule du type électrique, pour lequel est défini un côté droit et un côté gauche relativement à une direction rectiligne de roulement de ce véhicule, comprenant au moins un premier moteur électrique asynchrone permettant l'entraînement d'une première roue, située dudit côté droit dudit véhicule, et un deuxième moteur électrique asynchrone permettant l'entraînement d'une deuxième roue, située dudit côté gauche dudit véhicule.

Il est connu du document DE-4 011 291 un système moteur d'un véhicule électrique comprenant au moins un moteur d'entraînement d'une roue située sur le côté droit du véhicule et un autre moteur d'entraînement d'une roue situé sur le côté gauche du véhicule. L'alimentation de chacun de ces moteurs est gérée par une propre commande secondaire définissant la valeur de consigne soit de la puissance fournie à la roue respective, soit de la vitesse angulaire de cette roue. Les commandes secondaires sont ensuite reliées à une commande principale chargée d'assurer une homogénéité dans la commande des divers moteurs de telle manière que le comportement de chaque moteur soit cohérent avec le comportement des autres moteurs en fonction des conditions de roulement du véhicule.

Le système moteur décrit ci-avant présente plusieurs inconvénients. Premièrement, les diverses commandes secondaires et la commande centrale prévue dans ce système moteur sont onéreuses. Deuxièmement, un tel système moteur dans lequel une commande centrale est chargée d'envoyer des commandes spécifiques à chacune des commandes secondaires prévue pour gérer l'alimentation d'un moteur a de forts risques d'engendrer des comportements routiers inappropriés dans plusieurs situations pouvant survenir et qui n'auront pas pu être intégrées dans la commande centrale ou dans les commandes secondaires étant donné leur complexité. Les multiples commandes de ce système forment des filtres qui diminuent sensiblement, lorsqu'un moteur se trouve momentanément dans une situation extrême, la possibilité aux autres moteurs de réagir instantanément en conséquence pour assurer le bon roulement du véhicule. Un tel système moteur a donc une souplesse limitée et une faible capacité de réaction instantanée, ce qui le rend inefficace, voire inapproprié dans plusieurs situations de roulement pouvant survenir.

Il est connu du document EP-A-0 085 394 un deuxième système moteur dans lequel est prévu une alimentation en parallèle de plusieurs moteurs à induction. La fréquence d'alimentation est déterminée par une fréquence de référence à laquelle on ajoute ou soustrait une fréquence de glissement selon que le système est activé dans un mode de propulsion ou dans un mode de freinage.

Le problème mentionné dans le document EP-A-0 085 394 concerne la variation du diamètre des roues d'un même véhicule, ce qui résulte en des vitesses de rotation différentes de ces roues. La solution proposée par ce document est la suivante : Lorsque le véhicule roule à régime constant, un dispositif permet de déterminer et de mémoriser quelle roue tourne le plus rapidement, à savoir la roue de plus petit diamètre, et quelle autre roue tourne le plus lentement, a savoir la roue de plus grand diamètre. Lors d'une augmentation du régime moteur, la fréquence de référence susmentionnée est déterminée par la roue ayant en régime constant la fréquence de rotation maximale. Au contraire, lors d'un freinage électrique, la fréquence de référence est déterminée par la roue ayant en régime constant la fréquence de rotation minimale.

La solution proposée ci-dessus part de l'hypothèse que la roue ayant en régime constant la fréquence la plus élevée sera la dernière roue à décrocher en cas de patinage des roues en régime de propulsion, et que la roue ayant en régime constant la fréquence la plus basse sera la dernière à bloquer en régime de freinage électrique. Cette hypothèse ne peut être établie que pour des conditions de roulement identiques pour les roues d'un véhicule, ce qui n'est souvent pas le cas en situation de patinage ou de blocage des roues. Ensuite, en cas de freinage, si la roue de plus grand diamètre bloque à cause d'une perte d'adhérence due à une condition particulière locale de la chaussée, toutes les roues vont bloquer avec la solution proposée dans le document susmentionné, ce qui est très dangereux pour les occupants du véhicule et pour la sécurité routière.

Le document US-A-4 335 337 décrit un système moteur pour un véhicule électrique permettant l'alimentation en parallèle de plusieurs moteurs à induction. La fréquence d'alimentation est déterminée par une fréquence de référence à laquelle on ajoute ou soustrait une fréquence de glissement selon que le système est activé dans un mode de propulsion ou dans un mode freinage. La fréquence rotorique de chacun desdits moteurs est mesurée et fournie à l'entrée d'un circuit électronique dont le signal de sortie est égal audit signal de référence obtenu en sélectionnant, parmi lesdites fréquences rotoriques mesurées, celle représentative de la fréquence rotorique maximale lorsque le mode de freinage est activé et la fréquence rotorique minimale lorsque le mode de propulsion est activé.

Un but de la présente invention est de pallier les inconvénients du deuxième système moteur décrit ci-avant en proposant un système moteur ayant une grande souplesse d'utilisation et présentant de très bonnes performances routières.

Un autre but de la présente invention est de fournir un système moteur qui assure un très bon rendement énergétique et une exploitation optimale des moteurs utilisés.

La présente invention a donc pour objet un système moteur d'un véhicule du type électrique comprenant au moins deux moteurs électriques asynchrones, chacun de ces moteurs étant couplé à une seule roue respective dudit véhicule et comprenant :

- un bobinage statorique agencé de manière à produire un champ magnétique tournant à une fréquence statorique en réponse à un courant d'alimentation alternatif, fourni audit bobinage statorique par des moyens d'alimentation électrique sous une tension alternative définissant une fréquence d'alimentation;
- un rotor couplé magnétiquement audit bobinage statorique, ce rotor ayant une fréquence rotorique de rotation dont la valeur dépend de la valeur dudit champ magnétique tournant;
- un dispositif de commande fournissant auxdits moyens d'alimentation électrique un premier signal de commande, en réponse à un signal de fréquence fourni à ce dispositif de commande, qui détermine pour chacun desdits moteurs une même valeur pour ladite fréquence d'alimentation, cette valeur de ladite fréquence d'alimentation définissant pour ladite fréquence statorique de chacun desdits moteurs une même valeur résultante, ledit dispositif de commande étant agencé de manière que ladite valeur résultante soit supérieure à la valeur dudit signal de fréquence lorsqu'un mode de propulsion est activé dans ledit système moteur et que ladite valeur résultante de la fréquence statorique (FST) soit inférieure à la valeur dudit signal de fréquence (SFMX) ayant servi à régler cette valeur résultante, lorsqu'un mode de freinage (FRN) est activé dans ledit système moteur;

le système moteur étant caractérisé en ce que ladite fréquence rotorique de chacun desdits moteurs est mesurée par des premiers moyens de mesure et fournie à une électronique de traitement de signaux de mesure appartenant audit système moteur, cette électronique de traitement fournissant à une première sortie, reliée à une première entrée dudit dispositif de commande, ledit signal de fréquence qui est, parmi lesdites fréquences rotoriques mesurées, représentatif de la fréquence rotorique maximale que ce soit en mode de propulsion ou en mode de freinage.

Il résulte de ces caractéristiques un système moteur comprenant un seul et même dispositif de commande des moyens d'alimentation électrique servant à alimenter au moins deux moteurs électriques asynchrones, chacun de ces deux moteurs étant couplé à une roue respective ou moyen d'entraînement du véhicule équipé de ce système moteur. Ensuite, lorsque le mode de propulsion de ce système moteur est activé, on assure pour tous lesdits moteurs un régime de propulsion, car quelles que soient les conditions de roulement, par exemple dans des virages ou sur une route présentant des inégalités de surface, le glissement est toujours positif pour chacun desdits moteurs électriques asynchrones.

De plus, si une desdites roues accélère par suite de perte d'adhérence, le moment de force exercé sur cette roue est diminué car le glissement est instantanément diminué, ceci étant donné l'intervalle de temps de réaction nécessaire aux moyens de mesure des fréquences rotoriques, au dispositif de commande et aux moyens d'alimentation électrique. Dans ce dernier cas, la roue perd immédiatement de la vitesse et retourne à une situation d'adhérence avec le sol. On observe donc une auto-régulation de la condition d'adhérence pour toutes les roues du véhicule couplées respectivement à un desdits moteurs du système moteur tant qu'au moins une desdites roues remplit cette condition d'adhérence. On notera encore que lors d'une perte instantanée d'adhérence d'une desdites roues, la fréquence de celle-ci ne dépassera guère ladite fréquence de rotation du champ magnétique tournant parce qu'au-delà de cette fréquence de rotation, le moteur couplé à cette roue passe à un mode de freinage.

Selon une autre caractéristique de l'invention, ledit dispositif de commande est agencé de manière que ladite valeur résultante de ladite fréquence statorique de chacun desdits moteurs est inférieure à la valeur dudit signal de fréquence ayant servi à régler cette valeur résultante lorsqu'un mode de freinage est activé.

Il résulte de cette caractéristique un mode de freinage complémentaire présentant les performances dudit mode de propulsion et étant géré par le même dispositif de commande. Le fait de régler la valeur résultante de la fréquence statorique dans le mode de freinage à l'aide de la fréquence rotorique maximale conduit à un dispositif de freinage performant, empêchant le blocage des roues. En effet, si une roue décroche lors du freinage, sa vitesse ne peut que diminuer et ainsi le moment de force de freinage appliqué sur cette roue diminue. En conséquence, la roue adhère à nouveau et reprend sa vitesse normale de roulement. Ainsi, le moment de force de freinage maximal est toujours fourni aux roues présentant une bonne adhérence avec le sol.

On remarquera qu'en fin de freinage, il est naturellement prévu que le premier signal de commande de la fréquence corresponde en tout temps à une fréquence positive.

Selon un mode de réalisation particulier de l'invention, il est prévu un système moteur comprenant seulement deux moteurs électriques asynchrones, ces deux moteurs étant respectivement couplés avec une roue située d'un côté et de l'autre du véhicule. Il est ainsi possible d'obtenir un véhicule à traction avant ou à traction arrière.

Selon un autre mode de réalisation particulier de l'invention, il est prévu que chacune des roues du véhicule équipé du système moteur soit respectivement couplée avec un moteur électrique asynchrone respectif.

On notera ici qu'il est possible de dimensionner différemment les moteurs situés à l'avant du véhicule et les moteurs situés à l'arrière du véhicule de manière que la puissance mécanique délivrée par lesdits moteurs situés à l'avant soit supérieure ou inférieure à la puissance mécanique délivrée par lesdits moteurs situés à l'arrière.

Selon une autre caractéristique particulière de l'invention, il est prévu que tous les moteurs dudit système moteur sont reliés à une seule et même alimentation électrique centrale qui alimente en parallèle ces moteurs en fournissant un courant d'alimentation alternatif principal.

Il résulte de cette caractéristique particulière une diminution sensible du coût du système moteur selon l'invention. De plus, cette solution apporte aussi des avantages électriques, particulièrement dans le cas où la source d'énergie est formée par une batterie électrique.

Selon d'autres caractéristiques du système moteur selon l'invention, l'amplitude de ladite tension d'alimentation est déterminée par la valeur d'un deuxième signal de commande, le premier signal de commande étant fourni, à une première entrée desdits moyens d'alimentation électrique, par les premiers moyens de réglage de la fréquence d'alimentation, le deuxième signal de commande étant fourni, à une deuxième entrée desdits moyens d'alimentation électrique, par des deuxièmes moyens de réglage de l'amplitude d'alimentation, ces premiers et deuxièmes moyens de réglage étant agencés de manière que, pour chaque valeur de la fréquence statorique, l'amplitude d'alimentation est susceptible de varier en fonction d'un signal de réglage entre une valeur minimale et une valeur maximale définie pour chaque valeur de la fréquence statorique, l'ensemble desdites valeurs maximales définissant une courbe limite de tension, la fréquence d'alimentation étant réglée de manière que, pour chaque valeur de la fréquence statorique, la différence de fréquence de rotation entre cette fréquence statorique et ladite fréquence rotorique maximale est maintenue sensiblement constante tant que ladite amplitude d'alimentation a une valeur inférieure à la valeur maximale définie pour cette valeur de la fréquence statorique, les premiers et deuxièmes moyens de réglage étant agencés de manière que ladite différence de fréquence est susceptible d'être augmentée en valeur absolue en fonction dudit signal de réglage lorsque, pour une valeur quelconque de la fréquence statorique, ladite amplitude d'alimentation a une valeur égale à ladite valeur maximale définie pour cette valeur de la fréquence statorique.

Il résulte de ces caractéristiques un système moteur dans lequel l'amplitude d'alimentation de la tension d'alimentation est susceptible de varier indépendamment de la fréquence d'alimentation, ce qui conduit à un très large domaine de régimes de fonctionnement possibles pour les moteurs utilisés. Il est possible de varier, pour une fréquence rotorique maximale donnée, le couple fourni par les moteurs au véhicule en variant premièrement l'amplitude d'alimentation de la tension d'alimentation et deuxièmement la valeur de la fréquence statorique et donc du glissement.

Ainsi, il est possible d'obtenir une utilisation relativement optimale des moteurs dudit système moteur selon l'invention sur tout un domaine de fonctionnement. En effet, on observe que le rendement optimal est obtenu pour une différence de fréquence sensiblement constante entre la fréquence statorique et la fréquence rotorique d'un moteur, quelle que soit la fréquence rotorique et l'amplitude de la tension d'alimentation et tant que cette dernière engendre un flux magnétique traversant le bobinage du rotor suffisamment éloigné du flux de saturation de ce moteur. La valeur de la différence de fréquence conduisant au rendement optimal du système moteur est déterminée en fonction des caractéristiques des moteurs asynchrones utilisés.

Il résulte encore de ces caractéristiques la possibilité d'augmenter la valeur de la puissance fournie aux moteurs jusqu'à une valeur limite pour laquelle le potentiel des moteurs est exploité au maximum. En effet, étant donné qu'il est possible de varier l'amplitude d'alimentation en fonction du moment de force demandé, la courbe limite de tension peut être située relativement près de la saturation magnétique des moteurs et en augmentant le glissement, le moment de force est augmenté tant que la valeur de ce glissement est située dans le domaine de travail des moteurs.

Selon une autre caractéristique particulière de l'invention, le système moteur comporte un dispositif de mesure du courant d'alimentation principal fourni par les moyens d'alimentation électrique aux moteurs de ce système moteur. Ce dispositif de mesure transmet un signal représentatif soit de l'amplitude, soit de l'intensité du courant d'alimentation principal à une unité produisant le signal de réglage de ce système moteur. Le signal de réglage est déterminé de manière que la valeur du signal de mesure du courant d'alimentation principal soit égale à la valeur d'un signal de consigne fourni également à l'unité de production du signal de réglage.

Il résulte de cette caractéristique particulière un système moteur dans lequel le courant d'alimentation principal est réglé en fonction d'un signal de consigne provenant par exemple d'une commande de propulsion ou d'une commande de freinage du véhicule équipé dudit système moteur. Le moment de force total fourni sur les arbres des moteurs est ainsi contrôlé par le signal de consigne, ce moment de force total étant fonction du courant d'alimentation principal fourni audit moteur.

Selon un mode de réalisation particulier de l'invention, il est prévu d'utiliser le système moteur selon l'invention dans un mode de propulsion et dans un mode de freinage. Pour ce faire, il est prévu une commande de propulsion et une commande de freinage fournissant respectivement un signal de propulsion et un signal de freinage à un dispositif de sélection. Ce dispositif de sélection est agencé de manière à fournir à sa sortie ledit signal de consigne, lequel a une valeur correspondant à celle dudit signal de propulsion lorsque le signal de freinage a une valeur de non-freinage et à celle dudit signal de freinage lorsque la valeur de ce dernier est différente de la valeur de non-freinage.

Il résulte de ce mode de réalisation particulier de l'invention un système moteur permettant d'activer un mode de propulsion et un mode de freinage du véhicule auquel il est associé. De plus, la commande de freinage a toujours la priorité sur la commande de propulsion, ce qui garantit une sécurité routière en cas de commandes simultanées contradictoires.

La présente invention sera mieux comprise à l'aide de la description qui suit, faite en référence aux dessins annexés qui sont donnés uniquement à titre d'exemple et sur lesquels :

- la figure 1 représente schématiquement un premier mode de réalisation d'un système moteur selon l'invention, ce dernier comprenant deux moteurs électriques asynchrones alimentés en parallèle;
- la figure 2 représente schématiquement un domaine d'alimentation des moteurs électriques asynchrones compris dans le premier mode de réalisation d'un système moteur selon l'invention;
- la figure 3 représente schématiquement une caractéristique définissant une amplitude normalisée de tension en fonction d'un signal représentatif d'une fréquence résultante déterminant une fréquence d'alimentation;
- la figure 4 représente schématiquement une caractéristique définissant un coefficient d'amplification de l'amplitude normalisée de tension en fonction d'un signal de réglage;
- la figure 5 représente schématiquement une caractéristique définissant une différence de fréquence de rotation variable, entre un champ magnétique statorique tournant et une fréquence rotorique maximale, en fonction d'un signal de réglage dans le cas du premier mode de réalisation selon l'invention;
- la figure 6 est un mode de réalisation d'une unité de production du signal de réglage dans le cas du premier mode de réalisation selon l'invention;
- la figure 7 représente schématiquement un deuxième mode de réalisation d'un système moteur selon l'invention;
- la figure 8 représente schématiquement deux caractéristiques définissant une différence de fréquence de rotation variable, entre le champ magnétique statorique tournant et la fréquence rotorique maximale, en fonction d'un signal de réglage dans le cas du deuxième mode de réalisation selon l'invention;
- la figure 9 représente schématiquement une caractéristique donnant un signal de correction d'un signal de commande de l'amplitude d'alimentation de la tension d'alimentation en fonction du niveau de tension d'une batterie utilisée comme source d'énergie.

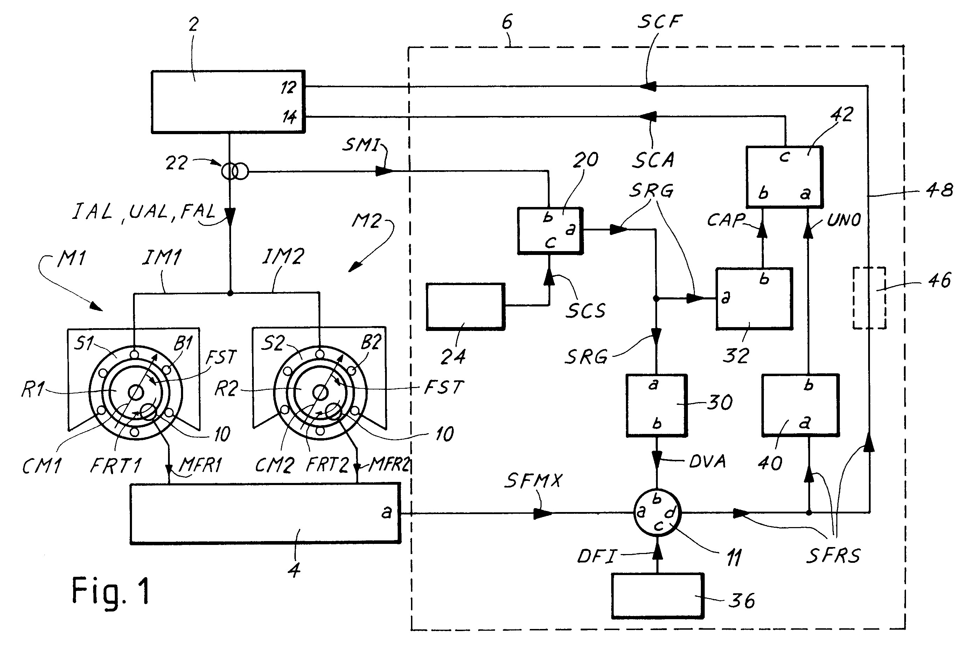

En se référant aux figures 1 à 6, on décrira ci-après un premier mode de réalisation d'un système moteur selon l'invention.

Sur la figure 1, le système moteur selon l'invention comprend des moyens d'alimentation électrique 2, nommés aussi par la suite alimentation électrique centrale, alimentant en parallèle un premier moteur électrique asynchrone M1 et un deuxième moteur électrique asynchrone M2.

Chacun des moteurs M1, M2 comporte un stator S1, S2 comprenant un bobinage statorique B1, B2 et un rotor R1, R2 comportant un bobinage rotorique fermé sur lui-même. L'alimentation électrique centrale 2 produit un courant d'alimentation électrique principal IAL alternatif et polyphasé sous une tension d'alimentation ayant une amplitude d'alimentation UAL et une fréquence d'alimentation FAL. Le courant d'alimentation IAL est formé par la somme du courant d'alimentation du premier moteur IM1 et du courant d'alimentation du deuxième moteur IM2.

Le bobinage statorique B1, B2 est agencé de telle manière que ledit courant d'alimentation IM1, IM2 du moteur respectif circulant dans ce bobinage statorique engendre un champ magnétique tournant CM1, CM2 à une fréquence statorique FST dans la région du rotor respectif, ce dernier ayant une fréquence rotorique de rotation FRT1, FRT2 dépendant du flux magnétique tournant et de la charge.

Chacun des moteurs M1, M2 est couplé à une seule roue respective du véhicule comprenant ce premier mode de réalisation d'un système moteur de l'invention. La fréquence de rotation de chacune de ces roues est une fonction linéaire de la fréquence rotorique FRT1, FRT2 du rotor respectif R1, R2.

Ci-après, on décrira brièvement le fonctionnement d'un moteur électrique asynchrone. Lorsque le rotor R1, R2 a une fréquence de rotation FRT1, FRT2 différente de la fréquence de rotation FST du champ magnétique tournant CM1, CM2, le flux de ce champ magnétique tournant qui traverse le bobinage du rotor induit dans ce bobinage une tension induite engendrant un courant électrique induit dans celui-ci. Dans ce cas, le rotor est soumis à une force électromagnétique, résultante du couplage entre le champ magnétique tournant CM1, CM2 et le courant électrique induit dans le bobinage rotorique, qui engendre sur l'arbre de sortie du moteur M1, M2 un moment de force. Pour un tel moteur asynchrone, on peut définir un glissement S égal à la différence de fréquence relative entre la fréquence de rotation du champ magnétique tournant et la fréquence de rotation du rotor.

Pour une fréquence statorique FST et une amplitude d'alimentation de la tension d'alimentation données, on observe une augmentation du courant d'alimentation lorsque le glissement S augmente, ainsi qu'une augmentation du moment de force lorsque le glissement varie entre une valeur nulle et une valeur de bascule pour laquelle le moment de force maximum est atteint. La plage de valeurs du glissement comprise entre la valeur nulle et la valeur de bascule définit une plage de travail du moteur pour cette fréquence statorique FST et cette amplitude d'alimentation données.

D'un autre côté, pour une fréquence statorique FST et un glissement S donné, on observe une augmentation du moment de force lorsque l'amplitude d'alimentation augmente et tant que le moteur n'a pas atteint la saturation magnétique.

Dans le premier mode de réalisation d'un système moteur selon l'invention représenté à la figure 1, des dispositifs de mesure 10 de la fréquence rotorique FRT1, FRT2 de chacun des rotors R1, R2 ont été prévus. Ces dispositifs de mesure 10 fournissent à une unité de traitement 4 des signaux de mesure un premier signal MFR1 représentatif de la fréquence rotorique FRT1 du premier moteur M1 et un signal MFR2 représentatif de la fréquence rotorique FRT2 du deuxième moteur M2.

L'alimentation électrique centrale 2 et l'unité de traitement 4 sont reliées à un dispositif de commande 6. L'unité de traitement 4 est agencé de manière à fournir à une sortie 4a un signal SFMX représentatif de la fréquence rotorique maximale entre la fréquence rotorique FRT1 du premier moteur M1 et la fréquence rotorique FRT2 du deuxième moteur M2. Ce signal SFMX est fourni à une entrée du dispositif de commande 6 constituée par l'entrée 11a d'un additionneur 11. Le dispositif de commande 6 est agencé de manière à fournir à une première entrée 12 de l'alimentation électrique centrale 2 un premier signal de commande SCF de la fréquence d'alimentation FAL et de fournir à une deuxième entrée 14 de cette alimentation centrale 2 un deuxième signal de commande SCA de l'amplitude d'alimentation UAL.

Le dispositif de commande 6 comprend une unité 20 de production d'un signal de réglage SRG fourni à une sortie 20a du cette unité 20. Une entrée 20b de cette unité 20 est reliée à un dispositif de mesure 22 du courant d'alimentation principal IAL qui lui fournit un signal SMI de mesure du courant d'alimentation électrique principal. Une autre entrée 20c de cette unité 20 est reliée à une unité de consigne 24 qui lui fournit un signal de consigne SCS. L'unité 20 de production d'un signal de réglage SRG est agencé de manière à produire ce signal de réglage SRG en fonction des signaux SMI et SCS entrant dans cette unité.

Le signal de réglage SRG est transmis à une entrée 30a d'une unité 30 de réglage de la différence de fréquence de rotation entre la fréquence statorique FST et la fréquence rotorique maximale FRM, ainsi qu'à l'entrée 32a d'une unité 32 de détermination d'un coefficient d'amplification CAP fourni à une sortie 32b de cette unité 32.

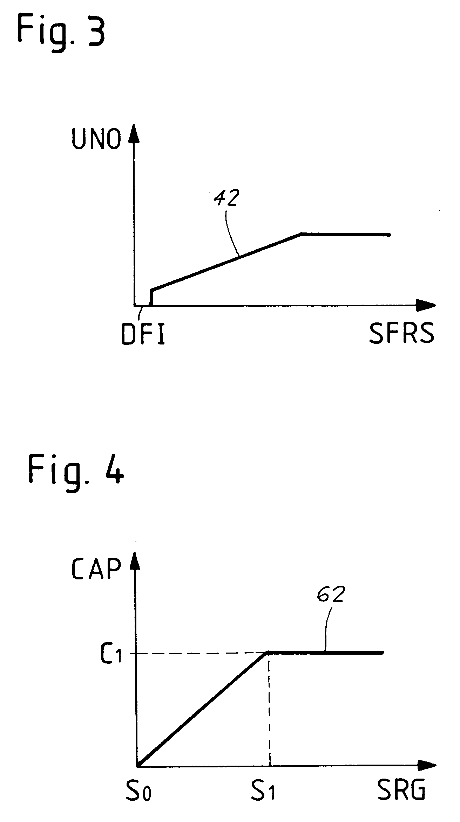

L'unité 30 fournit à une sortie 30b un signal DVA représentatif d'une différence de fréquence variable, ce signal DVA étant transmis à une entrée 11b de l'additionneur 11. Une entrée 11c de l'additionneur 11 est reliée à une unité 36 agencée de manière à produire un signal DFI représentatif d'une différence de fréquence fixe. L'additionneur 11 additionne les signaux SFMX, DVA et DFI transmis à ses entrées 11a, 11b et 11c pour fournir à sa sortie 11d un signal SFRS correspondant à une fréquence résultante. Ce signal SFRS sert à former le premier signal de commande SCF de la fréquence d'alimentation FAL. Ensuite, le signal SFRS fourni à la sortie 11d de l'additionneur 11 est transmis à une entrée 40a d'une unité 40 dans laquelle est mémorisée une courbe tension-fréquence normalisée 42 représentée schématiquement à la figure 3. L'unité 40 est agencée de manière à fournir à sa sortie 40b une amplitude normalisée de tension UNO en fonction du signal SFRS entrant à son entrée 40a.

Le signal UNO provenant de l'unité 40 et le signal CAP provenant de l'unité 32 sont respectivement transmis à une entrée 42a et à une entrée 42b d'une unité 42 dans laquelle ces deux signaux CAP et UNO sont multipliés. Le résultat de cette multiplication est fourni à la sortie 42c de cette unité 42 pour former le deuxième signal de commande SCA de l'amplitude d'alimentation UAL.

On remarquera qu'un amplificateur 46 est prévu sur le chemin électrique 48 reliant l'additionneur 11 à l'alimentation 2 dans le cas où le nombre de paires de pôles des bobinages statoriques B1, B2, prévus identiques, est différent de 1. Si le nombre de paires de pôles des bobinages statoriques B1 et B2 est donné par la variable P, il résulte une fréquence synchrone de rotation du rotor réduite par un facteur 1/P, ce qui est alors équivalent à un moteur ayant une seule paire de pôles magnétiques et une fréquence statorique FST=FAL/P .

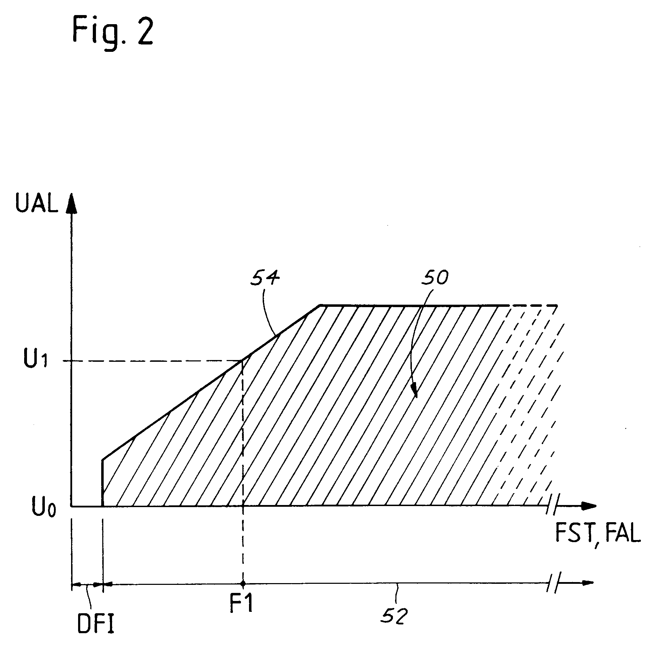

La figure 2 définit un domaine d'alimentation en tension 50 des moteurs M1, M2 alimentés par l'alimentation électrique centrale 2. Le domaine d'alimentation en tension 50 est représenté par un graphe donnant l'amplitude d'alimentation UAL de la tension d'alimentation en fonction de la fréquence statorique FST, la valeur de cette dernière étant un multiple entier de la valeur de Ta fréquence d'alimentation FAL de la tension d'alimentation. L'ensemble des valeurs que la fréquence statorique FST est susceptible de prendre définit une plage 52 de valeurs de fréquence accessibles à cette fréquence statorique FST.

Pour chaque valeur de fréquence F1 comprise dans la plage de valeurs 52, l'amplitude d'alimentation UAL est susceptible de varier entre une valeur minimale U0 et une valeur maximale U1, ces valeurs étant définies de manière spécifiques pour chaque valeur de fréquence F1 de ladite plage 52. L'ensemble des valeurs maximales U1 définit une courbe limite de tension 54.

Le dispositif de commande 6 du système moteur selon l'invention est agencé de manière que premièrement, la fréquence statorique FST, dont la valeur est déterminée par la valeur de la fréquence résultante FRS, est sensiblement égale à la somme de la fréquence rotorique maximale FMX et de la différence de fréquence fixe DFI tant que l'amplitude d'alimentation UAL de la tension d'alimentation a une valeur inférieure à la valeur maximale U1 pour cette fréquence statorique FST, ce qui correspond à une valeur sensiblement nulle pour la différence de fréquence variable DVA, et que deuxièmement, la différence de fréquence variable DVA est susceptible de prendre des valeurs supérieures à zéro lorsque l'amplitude UAL de la tension d'alimentation est égale à une valeur maximale U1 appartenant à la courbe limite de tension 54.

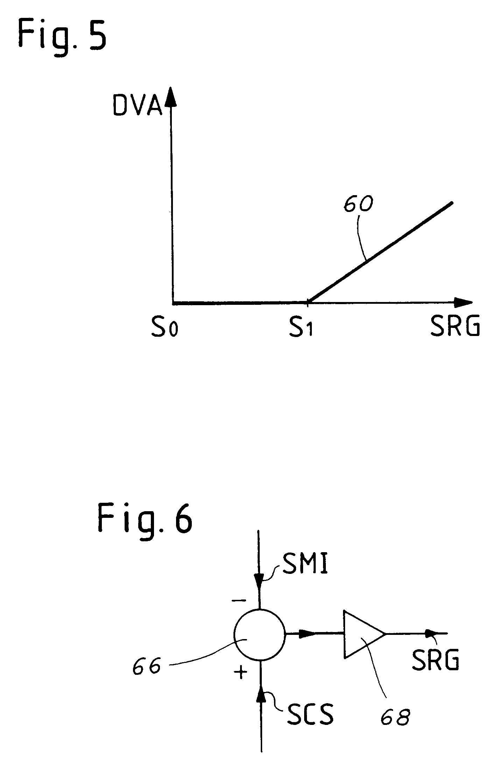

Le principe d'alimentation décrit ci-avant est atteint en particulier grâce à la fonction de transfert de l'unité 30, définie par la courbe 60 représentée schématiquement à la figure 5, à la fonction de transfert de l'unité 40 définie par la courbe de tension-fréquence normalisée 42 représentée schématiquement à la figure 3 et à la fonction, de transfert de l'unité 32 définie par la courbe caractéristique 62 représentée schématiquement à la figure 4.

Sur les figures 4 et 5, on observe que la valeur de la différence de fréquence variable DVA est fixée à zéro tant que le signal de réglage SRG est en-dessous d'une valeur donnée S1. D'un autre côté, le coefficient d'amplification CAP augmente de manière sensiblement linéaire en fonction du signal de réglage SRG entre une valeur initiale S0 et la valeur S1. Toutefois, il est possible de prévoir que la différence de fréquence variable DVA augmente légèrement en fonction du signal de réglage SRG entre les valeurs S0 et S1.

Pour la valeur S1, le coefficient d'amplification CAP atteint sa valeur maximale C1. Quand le signal de réglage SRG est supérieur à S1, le coefficient d'amplification est maintenu à la valeur maximale C1. Ce coefficient C1 est déterminé de manière que la courbe tension-fréquence normalisée 42 de la figure 3 multipliée par ce coefficient C1 donne la courbe limite de tension 54 représentée schématiquement à la figure 2, cette courbe limite de tension 54 étant prédéterminée en fonction des caractéristiques et des dimensions des moteurs électriques asynchrones utilisés.

D'un autre côté, lorsque le signal de réglage SRG est supérieur à S1, la différence de fréquence variable DVA prend des valeurs supérieures à zéro comme cela est représenté à la figure 5. La différence de fréquence variable DVA est supérieure à zéro lorsque le signal de réglage SRG est supérieur à S1 pour un mode de propulsion PPS du système moteur et augmente sensiblement linéairement avec le signal de réglage SRG.

Ainsi, tant que le signal de réglage SRG est endessous de la valeur S1, la fréquence résultante FRS, dont la valeur correspond à celle du premier signal de commande SCF de la fréquence d'alimentation FAL, correspond sensiblement à la fréquence rotorique maximale FMX à laquelle on a ajouté une différence de fréquence fixe DFI prédéterminée correspondant à un régime quasi optimal sur presque tout le domaine d'alimentation 50 des moteurs asynchrones utilisés.

On notera ici qu'il est aussi possible d'augmenter légèrement et progressivement la différence de fréquence entre les valeurs S0 et S1 du signal de réglage SRG de manière à assurer un régime tout à fait optimal sur le domaine d'alimentation 50.

Ensuite, selon la valeur donnée au signal de réglage SRG entre la valeur initiale S0 et la valeur S1, le deuxième signal de commande SCA de l'amplitude d'alimentation UAL transmis par l'unité 42 à l'alimentation électrique centrale 2 est susceptible de varier, pour chaque valeur de la fréquence résultante FRS, entre une valeur minimale U1 et une valeur maximale U2 appartenant à la courbe limite de tension 54.

D'un autre côté, lorsque le signal de réglage SRG a une valeur supérieure à la valeur S1, la différence de fréquence entre la fréquence statorique FST et la fréquence rotorique maximale FMX est augmentée, la valeur du signal DVA représentatif d'une différence de fréquence variable augmentant alors de manière significative.

On notera que, de manière avantageuse, la différence de fréquence variable DVA est maintenue constante lorsqu'elle a atteint une valeur maximale prédéterminée; c'est-à-dire qu'à partir d'une certaine valeur du signal de réglage, une augmentation de ce signal de réglage n'engendre plus d'augmentation de la différence de fréquence variable DVA.

Lorsque la valeur du signal de réglage SRG est supérieure à la valeur S1, le coefficient d'amplification CAP garde une valeur constante C1. Ceci a pour effet que le deuxième signal de commande SCA de l'amplitude d'alimentation UAL de la tension d'alimentation est représentatif d'une valeur de la courbe limite de tension 54, quelle que soit la valeur de la fréquence résultante FRS.

En résumé, l'amplitude d'alimentation UAL de la tension d'alimentation augmente, pour une fréquence de rotation maximale FMX donnée, entre la valeur minimale U0 et la valeur maximale U1, prédéterminée pour la fréquence statorique FST égale à cette fréquence rotorique maximale FMX à laquelle on a ajouté une différence de fréquence fixe DFI optimale, lorsque le signal de réglage augmente entre la valeur initiale S0 et la valeur S1. Ensuite, en admettant que la fréquence rotorique maximale FMX reste constante et que la valeur du signal de réglage continue d'augmenter audessus de la valeur S1, la différence de fréquence de rotation entre la fréquence statorique FST et la fréquence rotorique maximale FMX augmente de manière significative. Ceci correspond à une augmentation du glissement des moteurs et l'amplitude d'alimentation UAL de la tension d'alimentation sous laquelle l'alimentation électrique centrale 2 alimente les moteurs M1 et M2 prend la valeur maximale possible pour la valeur de la fréquence résultante FRS donnée par le premier signal de commande SCF de la fréquence statorique FST résultant de l'augmentation de la différence de fréquence.

Un mode de réalisation de l'unité 20 produisant le signal de réglage SRG est représenté à la figure 6. Sur cette figure, on observe que le signal de consigne SCS et le signal de mesure SMI du courant d'alimentation principal IAL sont soustraits l'un de l'autre à l'aide d'un différentiateur 66. Le résultat de cette différentiation est alors transmis à un régulateur 68 à action proportionnelle et intégrale. Le signal sortant du régulateur 68, notamment un signal de tension, constitue alors le signal de réglage SRG.

On remarquera ainsi que le premier mode de réalisation d'un système moteur, destiné à un véhicule du type électrique et représentés aux figures 1 à 6, permet de régler le moment de force total fourni par les moteurs asynchrones audit véhicule grâce à la mesure du courant d'alimentation électrique principal IAL, à l'unité de consigne 24 et à l'agencement de l'unité 20 servant à produire le signal de réglage SRG. En variant la valeur du signal de consigne SCS, le dispositif de commande 6 réagit de manière que la valeur du signal SMI correspondant à la valeur du courant d'alimentation principal prenne une valeur égale à la valeur du signal de consigne SCS.

Ensuite, le système moteur selon ce premier mode de réalisation de l'invention garantit pour chacun des moteurs asynchrones utilisés un régime correspondant à un mode de propulsion, la valeur du premier signal de commande SCF de la valeur de la fréquence d'alimentation FAL étant réglée de manière que cette dernière soit toujours supérieure à la valeur de la fréquence rotorique maximale FMX. Dans le cas spécifique où la valeur de la fréquence rotorique FRT1 du premier moteur M1 est égale à la valeur de la fréquence rotorique FRT2 du moteur M2, les deux moteurs sont alimentés sous une tension d'alimentation dont l'amplitude d'alimentation UAL et la fréquence d'alimentation FAL sont réglées de manière à avoir un très bon rendement sur tout le domaine de fonctionnement de ces moteurs, et aussi de manière à permettre une utilisation souple et performante des moteurs utilisés.

On remarquera ici qu'il est possible dans une variante de ce premier mode de réalisation d'avoir une alimentation électrique spécifique pour chacun des deux moteurs M1 et M2, chacune de ces alimentations étant réglée pour la fréquence d'alimentation par le premier signal de commande SCF et pour l'amplitude d'alimentation par la deuxième signal de commande SCA. Dans ce cas-ci, le dispositif de mesure 22 du courant d'alimentation électrique principale IAL est remplacé par un dispositif équivalent mesurant directement les courants IM1 et IM2 alimentant chacun des deux moteurs M1 et M2, le signal de mesure du courant SMI correspondant alors à la somme des deux courants IM1 et IM2 mesurés.

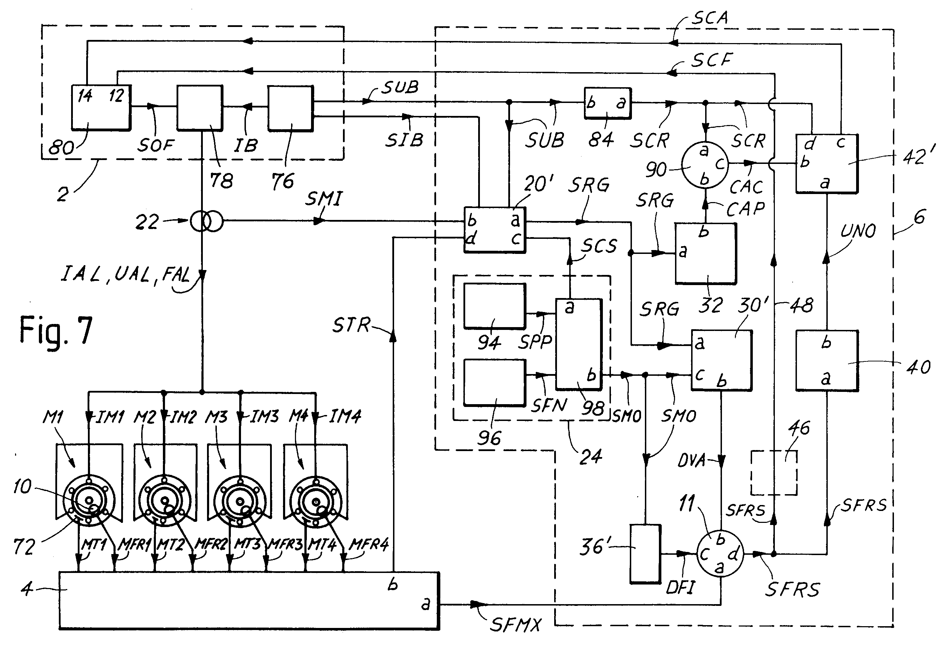

En se référant aux figures 7 à 9, on décrira ci-après un deuxième mode de réalisation d'un système moteur selon l'invention.

Les références déjà citées ci-avant dans la description du premier mode de réalisation d'un système moteur selon l'invention ne seront pas à nouveau décrites ici en détail. Seuls les unités et éléments nouveaux ou ayant subis une modification par rapport au premier mode de réalisation selon l'invention seront décrits ci-après.

Le système moteur d'un véhicule du type électrique selon ce deuxième mode de réalisation comprend quatre moteurs M1, M2, M3 et M4 alimentés chacun en parallèle par l'alimentation électrique centrale 2, chaque moteur étant alimenté par un courant d'alimentation alternatif propre IM1, IM2, IM3 et IM4. On notera que les quatre moteurs représentés sur la figure 7 sont sensiblement semblables aux moteurs M1, M2 décrits dans le premier mode de réalisation selon l'invention représenté sur la figure 1.

Des premiers moyens de mesure 10 (un seul de ces moyens étant référencé) fournissent des signaux de mesure MFR1, MFR2, MFR3 et MFR4, chacun de ces signaux étant respectivement représentatif de la fréquence rotorique d'un des quatre moteurs asynchrones. Dans ce cas-ci, le signal SFMX fourni à la sortie 4a de l'unité de traitement 4 est représentatif de la fréquence rotorique maximale des quatre moteurs décrits ici. On notera que de manière générale, quel que soit le nombre de moteurs compris dans le système moteur selon l'invention, le signal fourni à la sortie 4a de l'unité de traitement 4 correspond à la fréquence rotorique maximale de l'ensemble des moteurs utilisés.

Des deuxièmes moyens de mesure 72 de la température de chacun des moteurs M1 à M4 (un seul de ces moyens étant référencé) fournissent à l'unité de traitement 4 des signaux de mesure MT1, MT2, MT3 et MT4 correspondant à la valeur de la température respective de chacun desdits moteurs. L'unité de traitement 4 fournit à une sortie 4b un signal STR dont la valeur est fonction des valeurs de température mesurées par les deuxièmes moyens de mesure 72. Le signal STR est fourni à une entrée 20'd de l'unité 20'. Cette unité 20' de production du signal de réglage SRG est agencé de manière à produire ce signal de réglage SRG en fonction du signal de consigne SCS, du signal SMI provenant de la mesure du courant électrique d'alimentation électrique principale IAL et du signal STR, ce dernier donnant une information sur l'état de température des moteurs utilisés.

Comme dans le premier mode de réalisation selon l'invention, la valeur du courant d'alimentation principal IAL est réglée en fonction du signal de consigne SCS, le signal STR représentatif de l'état de température des moteurs servant de paramètre de correction ou de limitation du signal de consigne SCS. On notera ici qu'il est aussi possible dans une variante de ce deuxième mode de réalisation selon l'invention de produire un signal de réglage conformément au premier mode de réalisation selon l'invention, la valeur de ce signal de réglage étant ensuite adaptée en fonction de la valeur du signal STR.

L'alimentation électrique principale 2 est formée par une batterie 76, un dispositif de commutateurs de puissance 78 (IGBT : Insulated Gate Bipolar Transistor) et d'un modulateur de largeur d'impulsions 80 (PWM : Pulses Width Modulator).

Les premier et deuxième signaux de commande SCF et SCA sont fournis respectivement aux entrées 12 et 14 du modulateur de largeur d'impulsions 80. En réponse aux signaux SCF et SCA, le modulateur 80 fournit au dispositif de commutateurs de puissance 78 un signal SOF d'ouverture et de fermeture servant à gérer l'ouverture et la fermeture des différents commutateurs de ce dispositif de commutateurs de puissance. La batterie 76 fournit quant à elle un courant de batterie IB au dispositif de commutateurs de puissance 78 sous un niveau de tension UB. Les divers éléments de l'alimentation électrique centrale 2 décrite ici permet ainsi une commande indépendante de l'amplitude d'alimentation UAL et de la fréquence d'alimentation FAL.

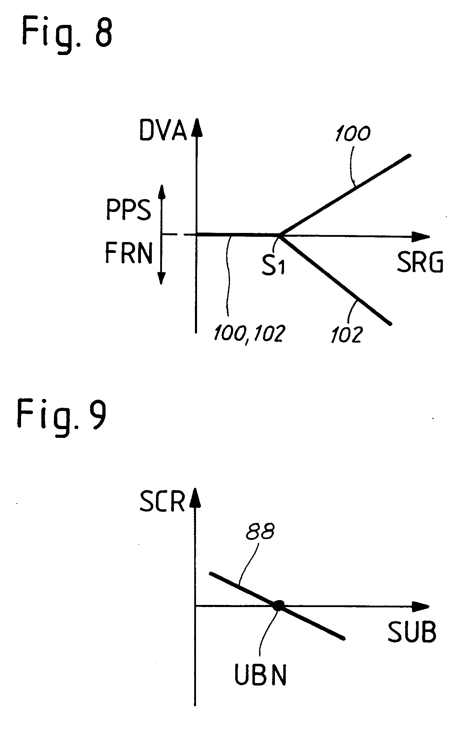

La batterie 76 fournit à l'unité 20, ainsi qu'à une unité de contrôle 84 un signal SUB représentatif du niveau de tension de cette batterie. La batterie 76 fournit aussi à l'unité 20 un signal SIB représentatif du courant de batterie IB fourni au dispositif de commutateurs de puissance 78. On remarquera que le courant de batterie IB sert à former le courant d'alimentation principal IAL sortant du dispositif de commutateurs de puissance 78. L'unité de contrôle 84 présente une fonction de transfert telle que définie par la courbe caractéristique 88 représentée schématiquement à la figure 9. Sur cette figure 9 est représenté un signal de correction SCR fourni à la sortie 84a de l'unité 84 en fonction du signal SUB représentatif du niveau de tension de la batterie 76 fourni à l'entrée 84b de cette unité 84. On notera que la valeur de la correction est nulle lorsque le niveau de tension de la batterie est égal à la tension nominale UBN de cette batterie.

Le signal SCR est ensuite transmis à une entrée 42'd de l'unité 42' de production du deuxième signal de commande SCA de l'amplitude d'alimentation UAL, ainsi qu'à une entrée 90a d'un additionneur 90, la seconde entrée 90b de cet additionneur étant relié à l'unité 32 qui lui fournit un signal représentatif d'un coefficient d'amplification comme décrit à la figure 4. Le résultat de l'addition effectué par l'additionneur 90 est fourni à une sortie 90c et définit un signal CAC représentatif d'un coefficient d'amplification corrigé. Ce signal CAC est transmis alors à l'entrée 42'b de l'unité 42'. L'unité 42' est agencée de manière à effectuer une multiplication entre l'entrée 42'a et l'entrée 42'b, c'est-à-dire entre le signal représentatif d'une amplitude normalisée de tension UNO, tel que défini à la figure 3, et le signal représentatif d'un coefficient d'amplification corrigé, puis à additionner le résultat de cette multiplication à la valeur du signal SCR fourni à l'entrée 42'd de cette unité 42'. Le résultat final obtenu est fourni à la sortie 42'c et forme le deuxième signal de commande SCA de l'amplitude d'alimentation UAL.

L'unité de consigne 24 comprend ici une commande de propulsion 94 et une commande de freinage 96. La commande de propulsion 94 fournit un signal de propulsion SPP à un dispositif de sélection 98. La commande de freinage fournit quant à elle un signal de freinage SFN au dispositif de sélection 98. Ce dispositif 98 est agencé de manière qu'à sa sortie 98a, il fournisse un signal de consigne SCS correspondant à la valeur du signal de propulsion SPP lorsque la valeur du signal de freinage SFN correspond à une valeur de non-freinage du système moteur de ce deuxième mode de réalisation selon l'invention. Par contre, l'unité 98 est agencée de manière que le signal de consigne SCS qu'elle fournit à l'unité 20' correspond à la valeur du signal de freinage SFN lorsque celui-ci a une valeur différente de la valeur de non-freinage. On remarquera ainsi que la commande de freinage 96 a la priorité sur la commande de propulsion 94.

Le dispositif de sélection 98 fournit à une sortie 98b un signal de mode SMO qu'elle transmet à une entrée 30'c de l'unité 30', ainsi qu'à l'unité 36'. Ce signal de mode SMO communique aux unités 30' et 36' le mode moteur activé, à savoir si le mode de propulsion PPS ou le mode de freinage FRN est activé. Le mode de propulsion est activé lorsque le signal de consigne SCS correspond au signal de propulsion SPP. De même, le mode de freinage est activé lorsque le signal de consigne SCS correspond au signal de freinage SFN.

Lorsque le mode de propulsion PPS est activé, la différence de fréquence fixe DFI mémorisée dans l'unité 36' a une valeur positive. Par contre, dans le cas où le mode de freinage FRN est activé, la valeur de cette différence de fréquence fixe DFI est négative. Dans une variante préférée de ce deuxième mode de réalisation, la valeur absolue de la différence de fréquence fixe DFI est identique pour les deux modes moteur possibles.

De manière équivalente, l'unité 30' est agencée de manière que, lorsque le mode de propulsion PPS est activé, la différence de fréquence variable DVA définie par la courbe caractéristique 100 sur la figure 8 prend une valeur positive lorsque le signal de réglage SRG a une valeur supérieure à la valeur S1. Par contre, lorsque le mode de freinage FRN est activé, l'unité 30' est agencée de manière à commuter sur la courbe caractéristique 102 représentée schématiquement à la figure 8, la différence de fréquence variable DVA résultante étant cette fois négative lorsque la valeur du signal de réglage SRG est supérieure à S1. De nouveau, dans la variante préférée de ce deuxième mode de réalisation, la valeur absolue de la différence de fréquence variable DVA pour un signal de réglage SRG donné est identique pour les deux modes moteur.

On observe ainsi dans la variante préférée de ce deuxième mode de réalisation une symétrie de fonctionnement entre le mode de propulsion PPS et le mode de freinage FRN. Il résulte de cette symétrie de fonctionnement un rendement optimal aussi bien dans le mode de propulsion que dans le mode de freinage.

On remarquera encore qu'il est prévu que le signal de consigne SCS garde le même signe mathématique pour les deux modes moteur possibles. Dans ce deuxième mode de réalisation selon l'invention, le signe mathématique de la valeur du signal de consigne SCS est positif. De même, le signe mathématique du signal de réglage SRG fourni par l'unité 20' est positif dans les deux modes moteur de ce deuxième mode de réalisation d'un système moteur selon l'invention. Cet agencement particulier a l'avantage de permettre un réglage du mode propulsion PPS et du mode freinage FRN à l'aide du même signal de mesure SMI du courant d'alimentation principal IAL fourni par le seul et même dispositif de mesure 22 de ce courant d'alimentation principal IAL.

La caractéristique particulière décrite ci-avant découle de l'observation du fait que le courant d'alimentation principal IAL a, que ce soit dans le mode de propulsion PPS ou dans le mode de freinage FRN, une valeur absolue identique pour un moment de force total exercé sur les arbres des quatre moteurs M1 à M4 utilisés dans ce deuxième mode de réalisation selon l'invention. Ceci s'explique par le fait que le courant d'alimentation alternatif d'un moteur asynchrone est formé par un courant de magnétisation engendrant un flux magnétique tournant et un courant actif dans le cas où le rotor n'a pas la même fréquence de rotation que le champ magnétique tournant dans cette région du rotor. Le courant de magnétisation est déphasé de 90° par rapport à la tension d'alimentation alternative qui produit ce courant de magnétisation. Ainsi, le courant de magnétisation ne produit pas de puissance active. Par contre, le courant actif est à nouveau déphasé de 90° par rapport au courant de magnétisation. On distingue alors deux cas possibles correspondant dans un premier cas au mode de propulsion PPS et dans le second cas au mode de freinage FRN.

Dans le mode de propulsion, le courant actif est phase avec la tension d'alimentation alternative. Il en résulte une puissance active positive correspondant à une puissance fournie aux moteurs et dont une partie est transformée en énergie mécanique de propulsion du véhicule. Dans le mode de freinage, le courant actif est déphasé de 180° par rapport à la tension alternative d'alimentation, c'est-à-dire que sa valeur est négative par rapport au courant actif du mode de propulsion. Dans ce cas-ci, la puissance active résultante est négative et correspond à une puissance électrique fournie en partie à l'alimentation électrique principale, cette puissance électrique fournie résultant d'une transformation d'énergie mécanique en énergie électrique provenant du freinage, c'est-à-dire de l'accélération négative du véhicule équipé du système moteur selon le deuxième mode de réalisation.

Ainsi, l'amplitude du courant d'alimentation ou son intensité restent identiques pour une même valeur absolue du courant actif, quel que soit le mode moteur dans lequel on se trouve, à savoir le mode de propulsion ou le mode de freinage. Dans le deuxième mode de réalisation, on utilise cette dernière propriété pour simplifier au maximum le système moteur selon l'invention. Pour ce faire, on mesure soit l'amplitude du courant d'alimentation principal IAL, soit la valeur moyenne redressée de ce courant. Ainsi, il est possible d'utiliser le seul et même dispositif de mesure 22 du courant d'alimentation principal IAL et la même unité 20' de production du signal de réglage SRG.

Pour une valeur mesurée du courant, on a soit un moment de force fourni par le moteur pour accélérer le véhicule, soit un moment de force de même valeur absolue et servant à freiner ce véhicule suivant que les glissements des moteurs M1 à M4 sont positifs ou négatifs. La seule adaptation dans le système moteur selon l'invention pour le passage du mode de propulsion PPS au mode de freinage FRN consiste donc à inverser le signe du glissement, tout en veillant à conserver le même signe mathématique pour le signal de consigne SCS.

On notera encore que le fait de régler la fréquence d'alimentation FAL, prévue identique pour tous les moteurs, sur le seul signal SFMX représentatif de la fréquence rotorique maximale de tous les moteurs compris dans le système moteur selon l'invention présente de nombreux avantages. Le premier avantage à noter réside dans le fait que la fréquence statorique de tous les moteurs, et donc la fréquence d'alimentation FAL de tous ces moteurs, est réglée sur la base de seulement deux signaux, à savoir le signal de consigne SCS et le signal SFMX. Ensuite, la fréquence statorique de tous les moteurs est réglée sur la base de ces deux mêmes signaux que ce soit en mode de propulsion PPS ou en mode de freinage FRN.

De plus, le choix du signal SFMX comme paramètre de réglage de la fréquence statorique FST de tous les moteurs garantit un comportement adéquat et cohérent de tous ces moteurs, que ce soit en mode de propulsion ou en mode de freinage. En effet, en mode de propulsion le système moteur selon l'invention assure un régime moteur pour chacun desdits moteurs.

Dans le cas du mode de freinage, le système moteur selon l'invention obtient de très bonnes performances de freinage en réglant la fréquence statorique de tous les moteurs sur le même paramètre défini par le signal SFMX correspondant à la fréquence rotorique maximale de tous les moteurs. En effet, on assure qu'aucune roue ne bloque pour une raison ou une autre, car si une roue décroche lors du freinage, sa vitesse ne peut que diminuer et ainsi le moment de force de freinage appliqué à la roue respective couplée à ce moteur diminue. En conséquence, la roue adhère à nouveau et reprend sa vitesse normale de roulement ou dans le cas d'une adhérence quasi nulle, sa différence de fréquence ne dépasse jamais la somme de la différence de fréquence fixe DFI et de la différence de fréquence variable DVA. Un tel système moteur présente ainsi l'avantage d'assurer une adhérence maximale des roues au sol lors d'une opération de freinage.

On remarquera qu'en fin de freinage, il est naturellement prévu que le premier signal de commande SCF de la fréquence d'alimentation FAL correspond en tout temps à une fréquence positive.

Finalement, dans une variante de ce deuxième mode de réalisation d'un système moteur selon l'invention où une traction intégrale est prévue, il est possible de prévoir un dimensionnement différent entre les moteurs situés à l'avant et les moteurs situés à l'arrière du véhicule. Dans ce cas-ci, il est prévu que les propriétés et les dimensions des moteurs à l'avant sont adaptées à celles des moteurs à l'arrière de manière que le fonctionnement de chacun des moteurs soit approprié au même dispositif de commande.

On remarquera que, dans cette variante, il est aussi possible de prévoir deux alimentations électriques, une pour les moteurs situés à l'avant et l'autre pour les moteurs situés à l'arrière, ces deux alimentations électriques étant commandées par le même dispositif de commande 6. Dans ce dernier cas, il est possible d'amplifier le deuxième signal de commande de l'amplitude d'alimentation entre le dispositif de commande et l'alimentation électrique alimentant les moteurs les plus puissants de manière à ce que ces moteurs plus puissants aient une amplitude d'alimentation supérieure, mais proportionnelle à l'amplitude d'alimentation des moteurs moins puissants.

## Revendications

1. Système moteur d'un véhicule du type électrique comprenant au moins deux moteurs électriques asynchrones (M1, M2; M3, M4), chacun de ces moteurs électriques asynchrones étant couplé à une roue respective dudit véhicule et comprenant :

   - un bobinage statorique (B1, B2) agencé de manière à produire un champ magnétique (CM1, CM2) tournant à une fréquence statorique (FST) en réponse à un courant d'alimentation alternatif (IM1, IM2, IM3, IM4) fourni audit bobinage statorique par des moyens d'alimentation électrique (2) sous une tension alternative définissant une fréquence d'alimentation (FAL);
   - un rotor (R1, R2) couplé magnétiquement audit bobinage statorique, ce rotor ayant une fréquence rotorique (FRT1, FRT2) de rotation dont la valeur dépend de la valeur dudit champ magnétique tournant;
   - un dispositif de commande fournissant auxdits moyens d'alimentation électrique (2) un premier signal de commande (SCF), en réponse à un signal de fréquence (SFMX) fourni à ce dispositif de commande, qui détermine pour chacun desdits moteurs une même valeur pour ladite fréquence d'alimentation, cette valeur de ladite fréquence d'alimentation définissant pour ladite fréquence statorique de chacun desdits moteurs une même valeur résultante, ledit dispositif de commande étant agencé de manière que ladite valeur résultante soit supérieure à la valeur dudit signal de fréquence lorsqu'un mode de propulsion (PPS) est activé dans ledit système moteur et que ladite valeur résultante de la fréquence statorique (FST) est inférieure à la valeur dudit signal de fréquence (SFMX), ayant servi à régler cette valeur résultante, lorsqu'un mode de freinage (FRN) est activé dans ledit système moteur;

   ce système moteur étant caractérisé en ce que ladite fréquence rotorique de chacun desdits moteurs est mesurée par des premiers moyens de mesure (10) et fournie à une électronique de traitement (4) de signaux de mesure appartenant audit système moteur, cette électronique de traitement fournissant à une première sortie (4a), reliée à une première entrée (11a) dudit dispositif de commande (6), ledit signal de fréquence (SFMX) qui est, parmi lesdites fréquences rotoriques mesurées, représentatif de la fréquence rotorique maximale que ce soit en mode de propulsion ou en mode de freinage.

2. Système moteur selon la revendication 1, caractérisé en ce que lesdits moyens d'alimentation électrique (2) sont agencés de manière à produire ladite tension d'alimentation de chacun desdits moteurs avec une amplitude d'alimentation (UAL) déterminée par la valeur d'un deuxième signal de commande (SCA) fourni par ledit dispositif de commande (6).

3. Système moteur selon l'une des revendications 1 et 2, caractérisé en ce que ledit véhicule comporte deux roues avant et deux roues arrière, ce véhicule comportant deux moteurs électriques asynchrones (M1, M2; M3, M4) couplés respectivement aux deux roues avant ou aux deux roues arrière.

4. Système moteur selon l'une des revendications 1 et 2, caractérisé en ce que ledit véhicule comporte deux roues avant et deux roues arrière, ce véhicule comportant deux moteurs électriques asynchrones (M1, M2) couplés respectivement aux deux roues avant et deux moteurs électriques asynchrones (M3, M4) couplés respectivement aux deux roues arrière.

5. Système moteur selon la revendication 4, caractérisé en ce que les deux moteurs électriques asynchrones (M1, M2) couplés aux deux roues avant sont dimensionnés différemment des deux moteurs électriques asynchrones (M3, M4) couplés aux deux roues arrière de manière que la puissance délivrée par les deux moteurs électriques asynchrones couplés aux deux roues avant est différente de la puissance délivrée par les deux moteurs électriques asynchrones couplés aux deux roues arrière.

6. Système moteur selon la revendication 4, caractérisé en ce que lesdits moyens d'alimentation (2) desdits moteurs électriques asynchrones (M1, M2; M3, M4) forment une seule et même alimentation électrique centrale (2) alimentant en parallèle ces moteurs électriques asynchrones et fournissant un courant d'alimentation alternatif principal (IAL).

7. Système moteur selon la revendication 2, caractérisé en ce que ledit premier signal de commande (SCF) est fourni, à une première entrée (12) desdits moyens d'alimentation électrique (2), par des premiers moyens de réglage (10, 30, 36; 30', 36')de ladite fréquence d'alimentation (FAL) appartenant audit dispositif de commande (6), ledit deuxième signal de commande (SCA) étant fourni, à une deuxième entrée (14) desdits moyens d'alimentation électrique, par des deuxièmes moyens de réglage (32, 40, 42; 42', 84, 90) de ladite amplitude d'alimentation (UAL) appartenant également audit dispositif de commande (6), ces premier et deuxième moyens de réglage étant agencés de manière que, pour chaque valeur de ladite fréquence statorique (FST), ladite amplitude d'alimentation est susceptible de varier en fonction d'un signal de réglage (SRG) entre une valeur minimale (U0) et une valeur maximale (U1) définie pour chaque valeur (F1) de ladite fréquence statorique (FST), l'ensemble desdites valeurs maximales définissant une courbe limite de tension (54), ladite fréquence d'alimentation (FAL) étant réglée de manière que, pour chaque valeur de ladite fréquence statorique, la différence de fréquence de rotation entre cette fréquence statorique (FST) et ladite fréquence rotorique maximale est maintenue sensiblement constante tant que ladite amplitude d'alimentation (UAL) a une valeur inférieure à ladite valeur maximale (U1) définie pour cette valeur de la fréquence statorique, lesdits premier et deuxième moyens de réglage étant agencés de manière que ladite différence de fréquence est susceptible d'être augmentée en valeur absolue en fonction dudit signal de réglage (SRG) lorsque, pour une valeur quelconque de la fréquence statorique, ladite amplitude d'alimentation a une valeur égale à ladite valeur maximale définie pour cette valeur de la fréquence statorique.

8. Système moteur selon la revendication 7, caractérisé en ce que lesdits premiers moyens de réglage (10, 30, 36; 30', 36') comprennent :

- une première unité (36; 36') capable de fournir un signal (DFI) représentatif d'une différence de fréquence fixe;
- une deuxième unité (30; 30') de réglage de ladite différence de fréquence de rotation entre ladite fréquence statorique (FST) et ladite fréquence rotorique maximale capable de fournir à une sortie (30b, 30'b) de cette deuxième unité un signal (DVA) représentatif d'une différence de fréquence variable en réponse audit signal de réglage (SRG) fourni à une première entrée (30a, 30'a) de cette deuxième unité par une troisième unité (20, 20') de production de ce signal de réglage appartenant audit dispositif de commande (6).
- un additionneur (11) dont les entrées (11a, 11b, 11c) sont reliées à ladite électronique de traitement (4) de signaux de mesure et auxdites première et deuxième unités, la sortie (11d) de cet additionneur étant reliée à ladite première entrée (12) desdits moyens d'alimentation électrique (2) et auxdits moyens de réglage (32, 40, 42; 42', 84, 90) de l'amplitude d'alimentation (UAL) de la tension d'alimentation, cet additionneur sommant ledit signal de fréquence (SFMX) représentatif de ladite fréquence rotorique maximale avec ledit signal (DFI) représentatif de ladite différence de fréquence fixe et ledit signal (DVA) représentatif de ladite différence de fréquence variable pour fournir à sa sortie (11d) un signal (SFRS) représentatif d'une fréquence résultante servant à former ledit premier signal de commande (SCF).

9. Système moteur selon la revendication 8, caractérisé en ce qu'un amplificateur (46) est prévu sur le chemin électrique (48) reliant ledit additionneur (11) auxdits moyens d'alimentation électrique (2), cet amplificateur multipliant ledit signal (SFRS) représentatif de ladite fréquence résultante par un facteur correspondant à un nombre de paires de pôles prévus pour chacun desdits bobinages statoriques (B1, B2) desdits moteurs électriques asynchrones (M1, M2).

10. Système moteur selon la revendication 8 ou 9, caractérisé en ce que lesdits deuxièmes moyens de réglage (32, 40, 42; 42', 84, 90) de ladite amplitude d'alimentation (UAL) de ladite tension d'alimentation comprennent :

- une quatrième unité (40) dont une entrée (40a) est reliée à la sortie (11d) dudit additionneur (11) et dans laquelle est mémorisée une courbe tension-fréquence normalisée (42) permettant de déterminer et de fournir à une sortie (40b) de cette quatrième unité un signal (UNO) représentatif d'une amplitude de tension normalisée en fonction dudit signal (SFRS) représentatif de ladite fréquence résultante provenant dudit additionneur;
- une cinquième unité (32) dont une entrée (32a) est reliée à ladite troisième unité (20, 20') permettant de déterminer et de fournir à une sortie (32b) de cette cinquième unité un coefficient d'amplification (CAP) en réponse audit signal de réglage (SRG) fourni par ladite troisième unité;
- une sixième unité (42; 42'), dont des entrées (42a, 42b; 42'a, 42'b) sont reliées respectivement auxdites quatrième et cinquième unités et dont une sortie (42c, 42'c) est reliée à ladite deuxième entrée (14) desdits moyens d'alimentation électrique (2), permettant d'effectuer une multiplication entre ledit signal (UNO) représentatif de ladite amplitude de tension normalisée, provenant de la quatrième unité, et ledit coefficient d'amplification (CAP), provenant de la cinquième unité, le résultat de ladite multiplication servant à former ledit deuxième signal de commande (SCA) qui est transmis à ladite deuxième entrée (14) desdits moyens d'alimentation électrique (2).

11. Système moteur selon l'une quelconque des revendications 8 à 10, caractérisé en ce que ladite troisième unité (20; 20') de production dudit signal de réglage (SRG) a une première entrée (20b; 20'b) reliée à un dispositif de mesure (22) de la somme (IAL) desdits courants d'alimentation alternatifs (IM1, IM2, IM3, IM4) alimentant lesdits moteurs (M1, M2, M3, M4), ce dispositif de mesure fournissant un signal (SMI) de mesure de cette somme, et une deuxième entrée (20c; 20'c) reliée à une unité de consigne (24) qui lui fournit un signal (SCS) de consigne, cette troisième unité étant agencée de manière à produire ledit signal de réglage (SRG) en réponse audit signal (SCS) de consigne et audit signal (SMI) de mesure.

12. Système moteur selon la revendication 11, caractérisé en ce que ladite unité de consigne (24) comprend une commande de propulsion (94) permettant de produire un signal de propulsion (SPP) et une commande de freinage (96) permettant de produire un signal de freinage (SFN), cette unité de consigne comprenant un dispositif de sélection (98) relié à ladite commande de propulsion et à ladite commande de freinage, une première sortie (98a) de ce dispositif de sélection étant reliée à une deuxième entrée (20'c) de ladite troisième unité (20') et une deuxième sortie (98b) de ce dispositif de sélection étant reliée à une deuxième entrée (30'c) de ladite deuxième unité (30'), ainsi qu'à ladite première unité, ledit dispositif de sélection (98) étant agencé de manière à fournir à sa première sortie (98a) ledit signal de consigne (SCS) avec une valeur correspondant à celle dudit signal de propulsion (SPP) lorsque ledit signal de freinage (SFN) a une valeur de non-freinage et à celle dudit signal de freinage lorsque la valeur de ce dernier est différente de ladite valeur de non-freinage, ledit dispositif de sélection (98) fournissant à sa deuxième sortie (98b) un signal de mode (SMO) ayant une première valeur correspond audit mode de propulsion (PPS) lorsque ledit signal de consigne (SCS) correspond audit signal de propulsion (SPP) et ayant une deuxième valeur correspondant audit mode de freinage (FRN) lorsque ledit signal de consigne correspond audit signal de freinage (SFN).

13. Système moteur selon la revendication 12, caractérisé en ce que lesdites première et deuxième unités (30', 36') sont respectivement agencées de manière que ladite différence de fréquence fixe et ladite différence de fréquence variable soient respectivement positives lorsque ledit signal de mode (SMO) défini un mode de propulsion (PPS) et négatives lorsque ce signal de mode définit un mode de freinage (FRN).

14. Système moteur selon l'une quelconque des revendications 8 à 13, caractérisé en ce que des deuxièmes moyens (72) de mesure de la température d'au moins un desdits moteurs électriques asynchrones (M1, M2; M3, M4) sont prévus, un signal (STR) représentatif de la température mesurée étant fourni à ladite troisième unité (20') de production du signal de réglage et servant à former la valeur dudit signal de réglage.

15. Système moteur selon l'une quelconque des revendications précédentes, caractérisé en ce que lesdits moyens d'alimentation électrique (2) comprennent au moins une batterie (76) reliée à un modulateur de largeur d'impulsions (78), ce dernier étant aussi relié à un dispositif de commutateurs de puissance (80), lesdites première et deuxième entrées (12, 14) desdits moyens d'alimentation électrique appartenant audit modulateur de largeur d'impulsions.

16. Système moteur selon les revendications 14 et 15, caractérisé en ce que ladite batterie (76) fournit un premier signal (SUB) représentatif de son niveau de tension à une unité de contrôle (84) de ce niveau de tension, cette dernière fournissant un signal (SCR) de correction auxdits deuxièmes moyens de réglage de l'amplitude d'alimentation (UAL), ce signal servant à former la valeur dudit deuxième signal de commande (SCA).

17. Système moteur selon la revendication 16, caractérisé en ce que ladite troisième unité (20') est reliée à ladite batterie (76) qui lui fournit ledit premier signal (SUB) représentatif de son niveau de tension et un deuxième signal (SIB) représentatif d'un courant de batterie (IB) qu'elle fournit audit dispositif de commutateurs de puissance (78).

**Claims**

1. Motor system for an electric vehicle comprising at least two asynchronous electric motors (M1, M2; M3, M4), each of these asynchronous electric motors being coupled to a respective wheel of said vehicle and comprising :

   - a stator winding (B1, B2) arranged to produce a magnetic field (CM1, CM2) turning at a stator frequency (FST) in response to an AC supply current (IM1, IM2, IM3, IM4) supplied to said stator winding by electric supply means (2) at an AC voltage defining a supply frequency (FAL);

- a rotor (R1, R2) magnetically coupled to said stator winding, this rotor rotating at a rotor frequency (FRT1, FRT2) whose value depends on the value of said turning magnetic field;

- a control device supplying to said electric supply means (2) a first control signal (SCF), in response to said frequency signal applied to this control device, which determines for each of said motors a common value for said supply frequency, this value of said supply frequency defining for said stator frequency of each of said motors a common resulting value, said control device being arranged so that said resulting value is greater than the value of said frequency signal when a drive mode (PPS) is activated in said motor system and that said resulting value of the stator frequency (FST) is less than the value of said frequency signal (SFMX) having served to regulate said resulting value when a braking mode (FRN) is activated in said motor system;

said motor system being characterized in that said rotor frequency of each of said motors is measured by first measuring means (10) and is supplied to electronic measuring-signal processing means (4) forming part of said motor system, this electronic processing means issuing at a first output (4a), connected to a first input (11a) of said control device (6), said frequency signal (SFMX) which represents, among said measured rotor frequencies, the maximum rotor frequency be that in drive mode or in braking mode.

2. Motor system according to claim 1, characterized in that said electric supply means (2) are arranged to produce said supply voltage for each of said motors with a supply amplitude (UAL) determined by the value a second control signal (SCA) supplied by said control device (6).

3. Motor system according to one of claims 1 and 2, characterized in that said electric vehicule comprises two front wheels and two rear wheels, this electric vehicle comprising two asynchronous electric motors (M1, M2; M3, M4) coupled respectively to the two front wheels or to the two rear wheels.

4. Motor system according to one of claims 1 and 2, characterized in that said electric vehicule comprises two front wheels and two rear wheels, this electric vehicle comprising two asynchronous electric motors (M1, M2) coupled respectively to said two front wheels and two asynchronous electric motors (M3, M4) coupled respectively to said two rear wheels.

5. Motor system according to claim 4, characterized in that said two asynchronous electric motors (M1, M2) coupled respectively to said two front wheels have different dimensions from said two asynchronous electric motors (M3, M4) coupled respectively to said two rear wheels so that the power delivered by said two asynchronous electric motors coupled with said two front wheels is different from the power delivered by said two asynchronous electric motors coupled to said two rear wheels.

6. Motor system according to claim 4, characterized in that said supply means (2) of said asynchronous electric motors (M1, M2, M3, M4) form a common central electric supply (2) supplying said asynchronous electric motors in parallel with a principal AC supply current (IAL).

7. Motor system according to claim 2, characterized in that said first control signal (SCF) is applied to a first input (12) of said electric supply means (2) by first regulation means (10, 30, 36; 30', 36') forming part of said control device (6) for regulating said supply frequency (FAL), said second control signal (SCA) being applied to a second input (14) of said electric supply means by second regulation means (32, 40, 42; 42', 84, 90) also forming part of said control device (6) for regulating said supply amplitude (UAL), said first and second regulation means being arranged so that, for each value of said stator frequency (FST), said supply amplitude is able to vary in dependence upon a regulation signal (SRG) between a minimum value (U0) and a maximum value (U1) defined for each value (F1) of said stator frequency (FST), said maximum values together defining a voltage limit curve (54), said supply frequency (FAL) being adjusted so that, for each value of said stator frequency, the rotation frequency-difference between said stator frequency (FST) and said maximum rotor frequency is maintained substantially constant as long as said supply amplitude (UAL) has a value less than said defined maximum value for this value of the stator frequency, said first and second regulation means being arranged so that the absolute value of said frequency difference can be increased in dependence upon said regulation signal (SRG) when, for any value of the stator frequency, said supply amplitude has a value equal to said defined maximum value for said value of the stator frequency.

8. Motor system according to claim 7, characterized in that said first regulation means (10, 30, 36; 30', 36') comprise;

- a first unit (36; 36') able to supply a signal (DFI) representing a fixed frequency difference;
- a second unit (30; 30') for regulating said rotation frequency-difference between said stator frequency (FST) and said maximum rotor frequency able to issue at an output (30b, 30'b) of this second unit a signal (DVA) representing a variable frequency-difference in response to said regulation signal (SRG) applied to a first input (30a, 30'a) of said second unit by a third unit (20, 20') forming part of said control device (6) for producing said regulation signal;

- an adder (11) whose inputs (11a, 11b, 11c) are connected to said electronic means (4) for processing the measuring signals and to said first and second units, the output (11d) of said adder being connected to said first input (12) of said electric supply means (2) and to said regulation means (32, 40, 42; 42', 84, 90) for regulating the supply amplitude (UAL) of the supply voltage, this adder adding said frequency signal (SFMX) representing said maximum rotor frequency to said signal (DFI) representing said fixed frequency-difference and to said signal (DVA) representing said variable frequency-difference to issue at its output (11d) a signal (SFRS) representing a resulting frequency which serves to produce said first control signal (SCF).

9. Motor system according to claim 8, characterized in that an amplifier (46) is provided in the electric path (48) connecting said adder (11) to said electric supply means (2), this amplifier multiplying said signal (SFRS) representing said resulting frequency by a factor corresponding to a number of pairs of poles provided for each of said stator windings (B1, B2) of said asynchronous electric motors (M1, M2).

10. Motor system according to claim 8 or 9, characterized in that said second regulation means (32, 40, 42; 42', 84, 90) of said supply amplitude (UAL) of said supply voltage comprise :

- a fourth unit (40) having an input (40a) connected to the output (11d) of said adder (11) and in which is memorized a normalized voltage-frequency curve (42) enabling a signal representing a normalized voltage amplitude (UNO) to be produced and supplied at an output (40b) of said fourth unit in dependence upon said signal (SFRS) representing said resulting frequency from said adder;
- a fifth unit (32) having an input (32a) connected to said third unit (20, 20') enabling an amplification coefficient (CAP) to be produced and supplied at an output (32b) of said fifth unit in response to said regulation signal (SRG) supplied by said third unit;
- a sixth unit (42; 42'), having inputs (42a, 42b; 42'a, 42'b) connected respectively to said fourth and fifth units and having an output (42c, 42'c) connected to said second input (14) of said electric supply means (2) enabling a multiplication to be carried out between said signal (UNO) representing said normalized voltage amplitude from the fourth unit and said amplification coefficient (CAP) from the fifth unit, the result of said multiplication serving to define said second control signal (SCA) transmitted to said second input (14) of said electric supply means (2).

11. Motor system according to any one of claims 8 to 10, characterized in that said third unit (20, 20') for producing said regulation signal (SRG) has a first input (20b;20'b) connected to a device (22) for measuring the sum (IAL) of said AC supply currents (IM1, IM2, IM3, IM4) supplying said motors (M1, M2, M3, M4), this measuring device supplying a signal (SMI) representing a measurement of this sum, and a second input (20c; 20'c) connected to an instruction unit (24) which supplies thereto an instruction signal (SCS), this third unit being arranged to produce said regulation signal (SRG) in response to said instruction signal (SCS) and said measuring signal (SMI).

12. Motor system according to claim 11, characterized in that said instruction unit (24) comprises a drive control (94) for producing a drive signal (SPP) and a braking control (96) for producing a braking signal (SFN), this instruction unit comprising a selection device (98) connected to said drive control and to said braking control, a first output (98a) of this selection device being connected to a second input (20'c) of said third unit (20') and a second output (98b) of this selection device being connected to a second input (30'c) of said second unit (30'), and to said first unit, said selection device (98) being arranged to supply at its first output (98a) said instruction signal (SCS) with a value corresponding to that of said drive signal (SPP) when said braking signal (SFN) has a non-braking value and to said braking signal when the value of the latter is different from said non-braking value, said selection device (98) supplying at its second output (98b) a mode signal (SMO) having a first value corresponding to said drive mode (PPS) when said instruction signal (SCS) corresponds to said drive signal (SPP) and having a second value corresponding to said braking mode (FRN) when said instruction signal corresponds to said braking signal (SFN).

13. Motor system according to claim 12, characterized in that said first and second units (30', 36') are respectively arranged so that said fixed frequency-difference and said variable frequency-difference are respectively positive when said mode signal (SMO) defines a drive mode (PPS) and negative when said mode signal defines a braking mode (FRN).

14. Motor system according to any one of claims 8 to 13, characterized in that second means (72) for measuring the temperature of at least one of said asynchronous electric motors (M1, M2, M3, M4) are provided, a signal (STR) representing the measured temperature being supplied to said third unit (20') for producing the regulation signal and serving to form the value of said regulation signal.

15. Motor system according to any one of the preceding claims, characterized in that said electric supply means (2) comprise at least one battery (76) connected to a pulse width modulator (78), the latter also being connected to power switching means (80), said first and second inputs (12, 14) of said electric supply means forming part of said pulse width modulator.

16. Motor system according to claims 14 and 15, characterized in that said battery (76) applies a first signal (SUB) representing its voltage level to a control unit (84) controlling said voltage level, said control unit applying a correction signal (SCR) to said second regulation means for regulating said supply amplitude (UAL), said correction signal serving to form the value of said second control signal (SCA).

17. Motor system according to claim 16, characterized in that said third unit (20') is connected to said battery (76) which applies to said third unit said first signal (SUB) which represents said voltage level, and a second signal (SIB) representing a battery current that the battery supplies to said power switch device (78).

**Patentansprüche**

1. Motorsystem eines Elektrofahrzeugs, umfassend mindestens zwei elektrische Asynchronmotoren (M1, M2; M3, M4), wobei jeder dieser elektrischen Asynchronmotoren mit einem zugeordneten Rad des Fahrzeugs gekuppelt ist und umfaßt:

   - eine Statorwicklung (B1, B2), die derart ausgebildet ist, daß sie ein mit einer Statorfrequenz (FST) umlaufendes Magnetfeld (CM1, CM2) in Reaktion auf einen Wechselspeisestrom (IM1, IM2, IM3, IM4) erzeugt, der der Statorwicklung mittels elektrischer Speisemittel (2) unter einer Wechselspannung, die eine Speisefrequenz (FAL) definiert, zugeführt wird;
   - einen Rotor (R1, R2), der magnetisch mit der Statorwicklung verkoppelt ist, welcher Rotor eine Umlaufrotorfrequenz (FRT1, FRT2) aufweist, deren Wert von dem Wert des umlaufenden Magnetfeldes abhängt;
   - eine Steuervorrichtung, die den elektrischen Speisemitteln (2) ein erstes Steuersignal (SCF) in Reaktion auf ein an die Steuervorrichtung geliefertes Frequenzsignal (SFMX) zuführt, welches für jeden der Motoren einen gleichen Wert für die Speisefrequenz festlegt, welcher Wert der Speisefrequenz für die Statorfrequenz jeder der Motoren einen gleichen resultierenden Wert definiert, welche Steuervorrichtung derart ausgebildet ist, daß dieser resultierende Wert größer als der Wert des Frequenzsignals ist, wenn ein Vortriebmodus (PPS) in dem Motorsystem aktiviert ist, und daß der resultierende Wert der Statorfrequenz (FST) kleiner ist als der Wert des Frequenzsignal (SFMX), das dazu gedient hat, diesen resultierenden Wert zu regulieren, wenn ein Bremsmodus (FRN) in dem Motorsystem aktiviert ist;

   welches Motorsystem dadurch gekennzeichnet ist, daß die Rotorfrequenz jedes der Motoren von ersten Meßmitteln (10) gemessen und einer Verarbeitungselektronik (4) für Meßsignale zugeführt wird, die zu dem Motorsystem gehört, welche Verarbeitungselektronik an einen mit einem ersten Eingang (11a) der Vorrichtung (6) verbundenen ersten Ausgang (4a) das Frequenzsignal (SFMX) liefert, welches unter den gemessenen Rotorfrequenzen repräsentativ für die maximale Rotorfrequenz ist, handele es sich um den Vortriebsmodus oder um den Bremsmodus.

2. Motorsystem nach Anspruch 1, dadurch gekennzeichnet, daß die elektrischen Speisemittel (2) derart ausgebildet sind, daß sie die Speisespannung jedes der Motoren mit einer Speiseamplitude (UAL) erzeugen, die durch den Wert eines zweiten von der Steuervorrichtung (6) gelieferten Steuersignals (SCA) festgelegt ist.

3. Motorsystem nach einem der Ansprüche 1 und 2, dadurch gekennzeichnet, daß das Fahrzeug zwei Vorderräder und zwei Hinterräder aufweist, welches Fahrzeug zwei mit den beiden Vorderrädern oder mit den beiden Hinterrädern gekuppelte elektrische Asynchronmotoren (M1, M2; M3, M4) umfaßt.

4. Motorsystem nach einem der Ansprüche 1 und 2, dadurch gekennzeichnet, daß das Fahrzeug zwei Vorderräder und zwei Hinterräder umfaßt, welches Fahrzeug zwei jeweils mit einem der beiden Vorderräder gekuppelte elektrische Asynchronmotoren (M1, M2) und zwei jeweils mit einem der beiden Hinterräder gekuppelte elektrische Asynchronmotoren (M3, M4) umfaßt.

5. Motorsystem nach Anspruch 4, dadurch gekennzeichnet, daß die beiden elektrischen Asynchronmotoren (M1, M2), die mit den beiden Vorderrädern gekuppelt sind, unterschiedlich dimensioniert sind bezüglich der beiden elektrischen Asynchronmotoren (M3, M4), die mit den beiden Hinterrädern gekuppelt sind, derart, daß die von den beiden mit den Vorderrädern gekuppelten elektrischen Asynchronmotoren gelieferte Leistung unterschiedlich ist gegenüber der Leistung, die von den beiden elektrischen Asynchronmotoren geliefert wird, die mit den beiden Hinterrädern gekuppelt sind.

6. Motorsystem nach Anspruch 4, dadurch gekennzeichnet, daß die Speisemittel (2) der elektrischen Asynchronmotoren (M1, M2; M3, M4) ein und dieselbe elektrische Speisezentrale (2) bilden, welche die elektrischen Asynchronmotoren parallel speist und einen Hauptspeisewechselstrom liefert (IAL).

7. Motorsystem nach Anspruch 2, dadurch gekennzeichnet, daß das erste Steuersignal (SCF) an einen ersten Eingang (12) der elektrischen Speisemittel (2) von ersten Regelmitteln (10, 30, 36; 30', 36') der Speisefrequenz (FAL), einen Teil der Steuervorrichtung (6) bildend, geliefert wird, daß das zweite Steuersignal (SCA) an einen zweiten Eingang (14) der elektrischen Speisemittel von zweiten Regelungsmitteln (32, 40, 42, 42', 84, 90) der Speiseamplitude (UAL), ebenfalls zugehörig der Steuervorrichtung (6), geliefert wird, daß die ersten und zweiten Regelungsmittel derart ausgebildet daß, daß für jeden Wert der Statorfrequenz (FST) die Speiseamplitude in Abhängigkeit von einem Regelungssignal (SRG) zwischen einem Minimalwert (U0) und einem Maximalwert (U1), der für jeden Wert (F1) der Statorfrequenz (FST) definiert ist, variabel ist, wobei die Gesamtheit der Maximalwerte eine Grenzspannungskurve (54) definieren, daß die Speisefrequenz (FAL) derart geregelt ist, daß für jeden Wert der Statorfrequenz die Rotationsfrequenzdifferenz zwischen dieser Statorfrequenz (FST) und und der maximalen Rotorfrequenz im wesentlichen konstant gehalten wird, während die Speiseamplitude (UAL) einen Wert aufweist, der kleiner ist als der Maximalwert (U1, der für diesen Wert der Statorfrequenz definiert ist, wobei die ersten und zweiten Regelungsmittel derart ausgebildet sind, daß die Frequenzdifferenz in ihrem Absolutwert in Abhängigkeit von dem Regelungssignal (SRG) vergrößerbar ist, wenn für irgendeinen Wert der Statorfrequenz die Speiseamplitude einen Wert gleich dem Maximalwert aufweist, der für diesen Wert der Statorfrequenz definiert ist.

8. Motorsystem nach Anspruch 7, dadurch gekennzeichnet, daß die ersten Regelungsmittel (10, 30, 36; 30', 36') umfassen:

- eine erste Einheit (36; 36'), die ein für eine feste Frequenzdifferenz repräsentatives Signal (DFI) liefern kann;

- eine zweite Regelungseinheit (30, 30') der Rotationsfrequenzdifferenz zwischen der Statorfrequenz (FST) und der maximalen Rotorfrequenz, welche Einheit in der Lage ist, an einen Ausgang (30b, 30'b) dieser zweiten Einheit ein Signal (DVA) zu liefern, das repräsentativ ist für eine Frequenzdifferenz, die variabel in Reaktion auf das Regelungssignal (SRG) ist, geliefert an einen ersten Eingang (30a, 30'a) dieser zweiten Einheit von einer dritten Einheit (20, 20') für die Erzeugung dieses Regelungssignals, zugehörig zu der Steuervorrichtung (6);

- einen Addierer (11), dessen Eingänge (11a, 11b, 11c) mit der Meßsignalverarbeitungselektronik (4) und der ersten und der zweiten Einheit verbunden sind, wobei der Ausgang (11d) dieses Addieres mit dem ersten Eingang (12) der elektrischen Speisemittel (2) und den Regelungsmitteln (32, 40, 42; 42', 84, 90) der Speiseamplitude (UAL) der Speisespannung verbunden ist, welcher Addierer das Frequenzsignal (SFMX), das repräsentativ für die maximale Rotorfrequenz ist, mit dem Signal (DFI), das repräsentativ für die feste Frequenzdifferenz ist, und dem Signal (DVA), das repräsentativ für die variabel Frequenzdifferenz ist, aufsummiert, um an seinen Ausgang (11d) ein Signal (SFRS) zu legen, das für eine resultierende Frequenz repräsentativ ist, die zur Bildung des ersten Steuersignals (SCF) dient.

9. Motorsystem nach Anspruch 8, dadurch gekennzeichnet, daß ein Verstärker (46) in dem elektrischen Pfad (48) vorgesehen ist, der den Addierer (11) mit den elektrischen Speisemitteln (2) verbindet, welcher Verstärker das Signal (SFRS), das für die resultierende Frequenz repräsentativ ist, mit einem Faktor multipliziert, der einer Anzahl von Polpaaren entspricht, die für jede der Statorwicklungen (B1, B2) der elektrischen Asynchronmotoren (M1, M2) vorgesehen ist.

10. Motorsystem nach Anspruch 8 oder 9, dadurch gekennzeichnet, daß die zweiten Regelungsmittel (32, 40, 42; 42', 84, 90) der Speiseamplitude (UAL) der Speisespannung umfassen:

- eine vierte Einheit (40), deren einer Eingang (40a) mit dem Ausgang (11d) des Adierers (11) verbunden ist, und in der eine normalisierte Spannungsfrequenzkurve (42) abgespeichert ist, die es ermöglicht, ein Signal (UNO) zu bestimmen und an einen Ausgang (40b) dieser vierten Einheit zu legen, das repräsentativ ist für eine normalisierte Amplitude der Spannung in Abhängigkeit von dem Signal (SFRS), das repräsentativ für die resultierende Frequenz ist, abgegriffen an dem Addierer;

- eine fünfte Einheit (32), deren einer Eingang (32a) mit der dritten Einheit (20, 20') verbunden ist, welche es ermöglicht, von dieser fünften Einheit einen Verstärkungsfaktor (CAP) in Reaktion auf das von der dritten Einheit gelieferte Regelungssignal (SRG) zu bestimmen und an einem Ausgang (32b) dieser fünften Einheit bereitzustellen;

- eine sechste Einheit (42, 42'), deren Eingänge (42a, 42b; 42'a, 42'b) mit der vierten bzw. fünften Einheit verbunden sind und deren Ausgang (42c, 42'c) mit dem zweiten Eingang (14) der elektrischen Speisemittel (2) verbunden ist, was es ermöglicht, eine Muliplikation zwischen dem für die normalisierte Amplitude der Spannung repräsentativen Signals (UNO), abgegriffen an der vierten Einheit, und dem von der fünften Einheit bereitgestellten Verstärkungsfaktor (CAP) auszuführen, wobei das Ergebnis dieser Multiplikation dazu dient, das zweite Steuersignal (SCA) zu bilden, das dem zweiten Eingang (14) der elektrischen Speisemittel (2) zugeführt wird.

11. Motorsystem nach einem der Ansprüche 8 bis 10, dadurch gekennzeichnet, daß die dritte Einheit (20; 20') für die Erzeugung des Regelungssignals (SRG) einen ersten Eingang (20b; 20'b) aufweist, der mit einer Meßvorrichtung (22) für die Summe (IAL) der Wechselspeiseströme (IM1, IM2, IM3, IM4), welche die Motoren (M1, M2, M3, M4) speisen, verbunden ist, welche Meßvorrichtung ein Meßsignal (SMI) dieser Summe liefert sowie einen zweiten Eingang (20c; 20'c) aufweist, der mit einer Vorzeicheneinheit (24) verbunden ist, welche ihr ein Vorzeichensignal (SCS) zuführt, wobei diese dritte Einheit derart ausgebildet ist, daß sie das Regelungssignal (SRG) in Reaktion auf das Vorzeichensignal (SCS) und daß Meßsignal (SMI) erzeugt.

12. Motorssystem nach Anspruch 11, dadurch gekennzeichnet, daß die Vorzeicheneinheit (24) eine Vortriebssteuerung (94) umfaßt, die es ermöglicht, ein Vortriebssignal (SPP) zu erzeugen, und eine Bremssteuerung (96) umfaßt, die es ermöglicht, ein Bremssignal (SFN) zu erzeugen, welche Vorzeicheneinheit eine Auswähleinrichtung (98) umfaßt, die mit der Vortriebssteuerung und der Bremssteuerung verbunden ist, wobei ein erster Ausgang (98a) dieser Auswählanordnung mit einem zweiten Eingang (20'c) der dritten Einheit (20') verbunden ist, und ein zweiter Ausgang (98b) dieser Auswählanordnung mit einem zweiten Eingang (30'c) der zweiten Einheit (30') sowie mit der ersten Einheit verbunden ist, welche Auswählanordnung (98) derart ausgebildet ist, daß sie an ihren ersten Ausgang (98a) das Vorzeichensignal (SCS) mit einem Wert entsprechend jenem des Vortriebssignals (SPP) liefert, wenn das Bremssignal (SFN) einen Nicht-Bremswert aufweist, und an jenen das Bremssignal liefert, wenn der Wert dieses letzteren von dem Nicht-Bremswert abweicht, welche Auswählanordnung (98) an ihren zweiten Ausgang (98b) ein Modussignal (SMO) mit einem ersten Wert entsprechend dem Vortriebsmodus (PPS) liefert, wenn das Vorzeichensignal (SCS) dem Vortriebssignal (SPP) entspricht, und mit einem zweiten Wert entsprechend dem Bremsmodus (FRN), wenn das Vorzeichensignal dem Bremssignal (SFN) entspricht.

13. Motorsystem nach Anspruch 12, dadurch gekennzeichnet, daß die erste und die zweite Einheit (30', 36') jeweils derart ausgebildet sind, daß die feste Frequenzdifferenz und die variable Frequenzdifferenz positiv sind, wenn das Modussignal (SMO) einen Vortriebsmodus (PPS) definiert, bzw. negativ sind, wenn dieses Modussignal einen Bremsmodus (FRN) definiert.

14. Motorsystem nach einem der Ansprüche 8 bis 13, dadurch gekennzeichnet, daß zweite Temperaturmeßmittel (72) mindestens eines der elektrischen Asynchronmotoren (M1, M2; M3, M4) vorgesehen sind und daß ein für die gemessene Temperatur repräsentatives Signal (STR) an die dritte Einheit (20') zum Erzeugen des Regelungssignals geliefert wird und zur Bildung des Wertes dieses Regelungssignals dient.

15. Motorsystem nach einem der vorangehenden Ansprüche, dadurch gekennzeichnet, daß die elektrischen Speisemittel (2) mindestens eine Batterie (76) umfassen, die mit einem Pulsbreitemodulator (78) verbunden ist, welcher letztere außerdem mit einer Leistungsumschaltvorrichtung (80) verbunden ist, wobei der erste und der zweite Eingang (12, 14) der elektrischen Speisemittel zu dem Pulsbreitemodulator gehört.

16. Motorsystem nach Ansprüchen 14 und 15, dadurch gekennzeichnet, daß die Batterie (76) ein erstes Signal (SUB), das repräsentativ für ihr Spannungsniveau ist, an eine Kontrolleinheit (84) dieses Spannungsniveaus liefert, welche letztere ein Korrektursignal (SCR) an die zweiten Regelungsmittel der Speiseamplitude (UAL) liefert, welches Signal dazu dient, den Wert des zweiten Steuersignals (SCA) zu bilden.

17. Motorsystem nach Anspruch 16, dadurch gekennzeichnet, daß die dritte Einheit (20') mit der Batterie (76) verbunden ist, welche ihr das erste Signal (SUB), das repräsentativ für ihr Spannungsniveau ist, liefert, sowie ein zweites Signal (SIB), das repräsentativ für einen Batteriestrom (IB) ist, den sie der Leistungsumschaltvorrichtung (78) liefert.

Fig. 1

EP 0 576 947 B1

EP 0 576 947 B1

Fig. 2

20

## Fig. 3

## Fig. 4

## Fig. 5

## Fig. 6

Fig. 7

EP 0 576 947 B1

# Fig. 8

# Fig. 9